Europäisches Patentamt

(19) European Patent Office

Office européen des brevets

(11) Numéro de publication : **0 296 974 B1**

# FASCICULE DE BREVET EUROPEEN

(12)

(45) Date de publication du fascicule du brevet :
**29.05.91 Bulletin 91/22**

(51) Int. Cl.⁵ : **F16F 1/36**

(21) Numéro de dépôt : **88401578.5**

(22) Date de dépôt : **22.06.88**

(54) **Supports élastiques.**

(30) Priorité : 23.06.87 FR 8708809
24.11.87 FR 8716240

(43) Date de publication de la demande :
**28.12.88 Bulletin 88/52**

(45) Mention de la délivrance du brevet :
**29.05.91 Bulletin 91/22**

(84) Etats contractants désignés :
**BE DE ES FR GB IT LU NL SE**

(56) Documents cités :
**EP-A- 0 101 235**
**WO-A-85/00207**
**FR-A- 2 089 650**
**FR-A- 2 275 696**
**FR-A- 2 545 443**
**GB-A- 984 139**
**US-A- 1 725 391**

(73) Titulaire : **HUTCHINSON**
**2 rue Balzac**
**F-75008 Paris (FR)**

(72) Inventeur : **Ciolczyk, Jean-Pierre**
**Résidence Dunois 11 rue Emile Zola**
**F-45200 Montargis (FR)**
Inventeur : **Simon, Jean-Michel**
**86, rue de Chatillon**
**F-92140 Clamart (FR)**

(74) Mandataire : **Ores, Irène et al**
**CABINET ORES 6, Avenue de Messine**
**F-75008 Paris (FR)**

EP 0 296 974 B1

## Description

La présente invention est relative à des supports élastiques.

On connaît des supports élastiques présentant une structure lamifiée, à savoir constituée par une succession de couches en élastomère alternées et adhérisées à des couches métalliques, normalement réalisées en acier.

Une telle structure est surtout destinée à travailler en cisaillement, c'est-à-dire à être sollicitée par des efforts perpendiculaires à l'axe (ou à la direction) d'empilage constituée par la superposition (ou juxtaposition) des différentes couches (bien que cette structure puisse travailler aussi bien en compression qu'en traction, mais ceci en moindre mesure).

Toutefois, un support à structure lamifiée du type précité ne permet pas d'obtenir de débattements importants sous faible charge, pour un encombrement donné : par exemple, sous une charge de 1 à 10 daN, on obtient seulement des débattements de 10 à 30 mm en cisaillement.

Or, la nécessité de disposer de supports élastiques autorisant des débattements importants, sous faible charge et pour un encombrement donné, se fait sentir dans différents domaines de la technique, en particulier, mais non de façon limitative, pour protéger du matériel électronique embarqué en cas de collisions
ou explosions
accidentelles : en effet, dans ces circonstances, il faut des supports ayant non seulement une grande capacité d'absorption des chocs, mais aussi la capacité "d'accompagner" ou de "suivre" l'onde de choc.

En ce qui concerne les supports à structure lamifiée précités, il y a lieu de souligner un autre inconvénient consistant en ce que leur comportement est loin d'être isotrope par rapport aux trois directions orthogonales d'un repère cartésien ; en particulier, le comportement en compression/traction selon l'axe de l'empilage des couches alternées élastomère/métal n'est pas comparable au comportement en cisaillement selon les deux axes perpendiculaires entre eux et à l'axe de l'empilage en question, notamment en raison de la présence d'une raideur trop importante dans cette dernière direction.

En plus, il y a lieu de noter l'inconvénient lié à la présence du phénomène de flambage des couches métallique. On connaît le brevet GB-A-984 139 qui décrit un support élastique comprenant une pluralité de bras élastomères, disposés symétriquement par rapport à un axe vertical, ainsi qu'un dispositif de fixation des extrémités de ces bras à une structure de base. Toutefois, le comportement en flexion de ce support élastique n'est pas satisfaisant en raison de la structure massive des bras élastomères.

La présente invention s'est donné pour but de pourvoir à des supports élastiques satisfaisant simultanément aux exigences suivantes :

– Obtention de débattements importants, sous faible charge et pour un encombrement donné,

– absence de flambage,

– comportement sensiblement isotrope suivant au moins deux directions d'un repère d'axes dans l'espace.

Or, dans le cas de la présente invention, il a été trouvé qu'il est possible de satisfaire à ce but en utilisant une pluralité de joncs (ou cordons ou câbles) réalisés en un matériau qui a une élasticité sensiblement supérieure à celle de l'acier, et notamment constitués par des matériaux composites, et qui sont noyés dans une matrice élastomère ayant une structure symétrique, par rapport à une direction donnée, permettant de la solliciter en flexion, quelle que soit l'orientation spatiale de la sollicitation à laquelle le support est soumis.

Un autre but de l'invention est de pourvoir à un support élastique qui, tout en satisfaisant aux exigences précitées, présente une raideur sensiblement réduite lorsqu'il est sollicité selon l'une quelconque des directions dudit repère d'axes dans l'espace.

De façon plus précise, la présente invention a pour objet un support élastique, comprenant :

– une structure élastomère constituée par une pluralité de bras en matière élastomère, cette structure étant symétrique par rapport à un axe donné et autorisant par une déformation desdits bras un débattement de la charge suivant les trois directions d'un repère d'axes dans l'espace ;

– une pluralité de dispositifs de fixation de la structure ; lequel support est caractérisé en ce qu'il comprend en outre une pluralité de câbles en matériau composite ; noyés dans les bras de la structure élastomère parallèlement à leurs axes longitudinaux, et en ce que les dispositifs de fixation présentent une configuration autorisant une sollicitation en flexion des câbles précités suivant deux directions perpendiculaires à la direction définie par les câbles et constituant avec cette dernière ledit repère d'axes dans l'espace comprenant l'axe de symétrie de la structure précitée.

En effet, il y a lieu de remarquer que :

– le fait de donner à la structure élastomère une configuration symétrique, destinée à travailler en flexion, conjointement aux moyens de renforcement qui y sont noyés, permet d'obtenir des débattements importants sous faible charge, pour un encombrement donné,

– le fait de réaliser lesdits moyens de renforcement en des matériaux composites permet d'éliminer le flambage,

– le fait de réaliser ces moyens de renforcement en matériaux composites, sous la forme de câbles noyés dans une structure symétrique par rapport à une direction donnée, permet de solliciter le support élastique de façon sensiblement isotrope suivant deux directions perpendiculaires à la direction de symétrie.

Selon un premier mode de réalisation préféré du support élastique conforme à l'invention, la structure élastomère est définie par une matrice symétrique en forme de croix à bras égaux et perpendiculaires entre eux et à l'axe de symétrie de la matrice, leurs axes longitudinaux étant orientés suivant les deux autres directions du repère précité et lesdits câbles étant noyés dans les bras de la croix parallèlement à l'axe de ces derniers, un dispositif de fixation étant prévu à l'extrémité latérale de chaque bras et offrant un appui à la flexion suivant deux directions perpendiculaires à l'axe du bras correspondant.

Selon une disposition avantageuse de ce mode de réalisation, chaque dispositif de fixation comporte une paire de rouleaux perpendiculaires à la fois à l'axe de symétrie précité et à l'axe du bras correspondant, ainsi qu'une paire de rouleaux parallèles à l'axe de symétrie et perpendiculaires à l'axe dudit bras correspondant, les rouleaux de chaque paire étant fixés dans un bâti et espacés de façon à permettre le logement avec appui et coulissement, de l'extrémité de ce bras.

Selon une autre disposition avantageuse du mode de réalisation précité, chaque dispositif de fixation est constitué par au moins un dispositif à structure lamifiée disposé d'un côté du bras correspondant, à une extrémité de celui-ci, ce dispositif à structure lamifiée comportant une pluralité de couches élastomères alternées et adhérisées à des couches de renforcement (métalliques ou en matériau composite), lesquelles couches sont parallèles à l'axe du bras correspondant et perpendiculaires à l'axe de symétrie.

Selon une modalité préférée de cette disposition, l'extrémité de chaque bras est pourvue de deux dispositifs à structure lamifiée du type précité, disposés de part et d'autre par rapport à ladite extrémité.

Selon une autre modalité préférée de la disposition précitée, chacune des extrémités desdits bras comporte trois dispositifs à structure lamifiée du type susdit, dont deux dispositifs sont disposés de part et d'autre par rapport à l'extrémité du bras correspondant, avec leurs axes alignés et leurs couches parallèles à l'axe du bras correspondant et perpendiculaires à l'axe de symétrie, tandis que le troisième dispositif est disposé avec son axe perpendiculaire à l'axe commun des deux premiers dispositifs et avec ses couches parallèles à la fois à l'axe du bras correspondant et à l'axe de symétrie.

Selon encore une autre disposition avantageuse du mode de réalisation précité, chaque dispositif de fixation est constitué par au moins une couche élastomère disposée d'un côté du bras correspondant à une extrémité de celui-ci.

Selon une variante de réalisation préférée des dispositifs de fixation, ceux-ci comportent également un moyen permettant le réglage de la fréquence d'oscillation propre du support élastique.

Selon une disposition préférée de cette variante de réalisation, le moyen permettant le réglage de ladite fréquence comporte une structure lamifiée à couches cylindriques constituée par un arbre central et au moins une succession de couches comprenant une couche élastomère cylindrique (adhérisée à cet axe) et une couche cylindrique métallique (adhérisée à cette couche élastomère), l'arbre étant perpendiculaire à l'axe du bras correspondant et à l'axe de symétrie, et étant disposé d'un côté de l'extrémité de ce bras et symétriquement par rapport à un plan passant par l'axe de ce bras et l'axe de symétrie, de manière à dépasser de part et d'autre l'encombrement transversal dudit bras correspondant, ladite extrémité étant reliée à la structure lamifiée cylindrique par deux couches élastomères, qui sont disposées de part et d'autre par rapport audit plan de symétrie (de cette structure lamifiée cylindrique) et qui sont adhérisées à des équerres, entre lesquelles est emprisonnée l'extrémité du bras correspondant.

Selon un deuxième mode de réalisation avantageux du support élastique conforme à l'invention, la matrice élastomère présente une structure symétrique annulaire carrée pourvue de diagonales, les câbles en matériau composite étant noyés dans chacun des côtés et dans chacune des diagonales de la matrice parallèlement à leurs axes correspondants, des dispositifs de fixation étant disposés dans la zone médiane des côtés de la matrice.

Bien entendu, les dispositifs de fixation précités autorisent la sollicitation en flexion des câbles suivant l'une quelconque des trois directions d'un repère d'axes dans l'espace, dont deux axes sont définis par les axes des diagonales, tandis que le troisième axe est perpendiculaire à ceux-ci.

Selon un troisième mode de réalisation préféré du support élastique conforme à l'invention, la matrice élastomère présente une structure symétrique en forme de croix à bras égaux et perpendiculaires entre eux et à l'axe de symétrie de la matrice, leurs axes longitudinaux étant orientés suivant les deux autres directions du repère précité et lesdits câbles étant noyés dans les bras de la croix parallèlement à l'axe de ces derniers, un dispositif de fixation étant prévu à l'extrémité latérale de chaque bras et offrant un appui à la flexion dans l'une quelconque des trois directions du repère précité, chaque dispositif de fixation d'extrémité étant constitué par au moins un ressort à lame disposé sur le prolongement de chaque bras de la matrice.

Selon un quatrième mode de réalisation avantageux du support élastique conforme à l'invention, — qui est une variante du troisième mode précité —, la structure élastomère est divisée et comprend au moins quatre bras séparés dans lesquels lesdits câbles sont noyés parallèlement à l'axe longitudinal de ces bras et dont une extrémité est destinée à être reliée à une charge utile à supporter, tandis que l'autre extrémité est reliée à un dispositif de fixation constitué par au moins un ressort à lame disposé sur le prolongement du bras correspondant de la structure divisée, les quatre bras étant orientés deux à deux suivant les deux autres directions du repère précité.

Selon une disposition avantageuse de ces troisième et quatrième modes de réalisation, chaque ressort à lame a une configuration définie par un profil sensiblement en arc de circonférence ou d'ellipse.

Selon une autre disposition préférée desdits troisième et quatrième modes de réalisation, chaque lame de ressort a une structure composite en sandwich formée d'au moins une couche centrale comprise entre deux couches externes, la couche centrale pouvant être réalisée en élastomère et les couches externes en matériau composite ou vice versa.

Selon une modalité avantageuse de cette disposition, la matrice est réalisée en un élastomère présentant un très bas coefficient d'amortissement, alors que chaque lame comporte un élastomère présentant un coefficient d'amortissement relativement élevé.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lequels :

La Fig. 1 montre un support élastique à structure lamifiée de l'Art antérieur, destiné à travailler essentiellement en cisaillement et, en une moindre mesure, en compression/traction ;

La Fig. 2 représente un support élastique à structure lamifiée, dont la configuration (sous forme de poutre lamifiée) est susceptible d'être sollicitée en flexion ;

La Fig. 3 illustre l'invention ;

La Fig. 4 représente un mode de réalisation préféré du support élastique selon l'invention, sous forme d'une croix à bras égaux et perpendiculaires entre eux ;

Les Fig. 5 à 8 représentent des variantes de réalisation d'un dispositif de fixation des extrémités des bras du support élastique illustré à la Fig. 4 ;

La Fig. 9 représente une vue en élévation latérale d'une variante de réalisation du dispositif de fixation des extrémités des bras du support élastique en forme de croix illustré à la Fig. 4, permettant en plus – par rapport aux variantes représentées aux Fig. 5 à 8 – de régler la fréquence d'oscillation propre du support élastique ;

La Fig. 10 est une vue suivant le plan X-X de la Fig. 9.

La Fig. 11 est une vue de dessus d'un deuxième mode de réalisation du support élastique conforme à la présente invention ;

La Fig. 12 est une vue de dessous du support représenté à la Fig. 11 ;

La Fig. 13 est une vue en élévation latérale du support illustré aux Fig. 11 et 12 ;

Les Fig. 14a à 14c représentent des variantes de détails de réalisation des jonctions entre une diagonale de la matrice et les côtés de celle-ci ;

La Fig. 15 est une vue en élévation, avec coupe partielle, d'un troisième mode de réalisation du support élastique selon l'invention ;

La Fig. 16 est une vue de dessus du support élastique illustré à la figure 15.

Il doit être bien entendu, toutefois, que ces dessins et les parties descriptives correspondantes, sont donnés uniquement à titre d'illustration de l'objet de l'invention, dont ils ne constituent en aucune manière une limitation.

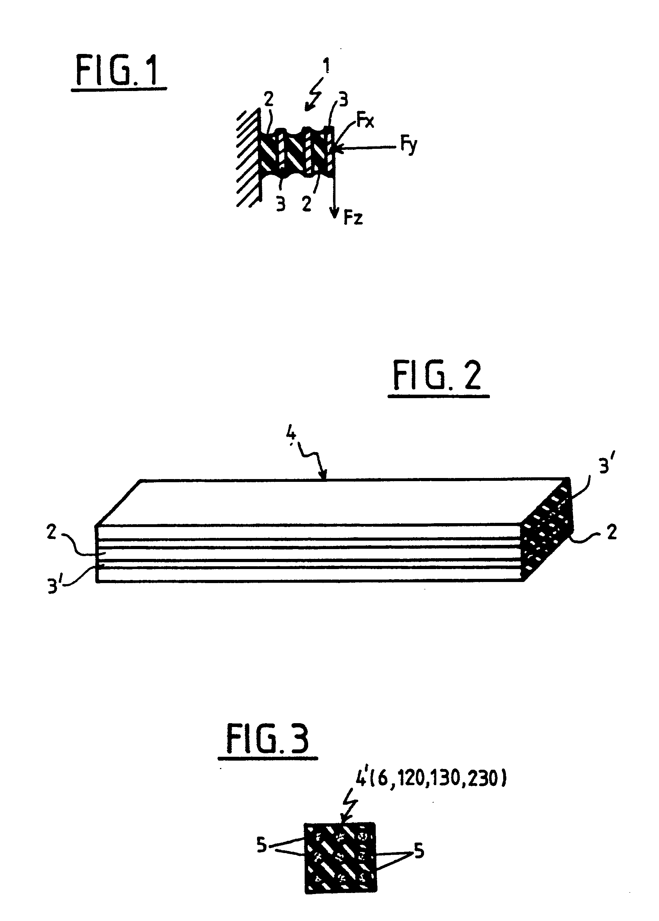

La Fig. 1 représente un support élastique 1 connu dans l'Art Antérieur et ayant une structure lamifiée portant une succession de couches élastomères 2 alternées et adhérisées à des couches métalliques 3. Les références Fx, Fy et Fz représentent les trois composantes d'une sollicitation quelconque selon trois axes d'un repère cartésien d'axes orthogonaux, appliquée à l'extrémité libre du support élastique 1.

Il est clair que les composantes Fx et Fz sollicitent ce support en cisaillement, tandis que la composante Fy le sollicite en compression (bien que des sollicitations de traction soient aussi susceptibles d'agir sur ce support, mais en moindre mesure).

Comme déjà précisé plus haut, lors de la description de l'état de la technique, un support à structure lamifiée, tel que celui représenté à la Fig. 1, ne permet pas d'obtenir des débattements importants sous faible charge, pour un encombrement donné, et il présente un comportement non isotrope, étant donné que le comportement selon des sollicitations dirigées comme Fy (en compression/traction) n'est pas le même que selon des sollicitations dirigées comme Fx et Fz (en cisaillement).

De plus, pour les couches métalliques existe le problème du flambage.

En partant de l'état de la technique constitué par un support à structure lamifiée décrit ci-dessus, on pourrait essayer d'obtenir des débattements importants en le faisant travailler en flexion. Le support élastique (ayant une telle structure lamifiée) aurait ainsi la configuration d'une poutre lamifiée, qui serait sollicitée en flexion suivant une direction perpendiculaire à l'axe de cette poutre et au plan de chaque couche, dont elle se compose.

Toutefois, bien que le problème des débattements, évoqué plus haut, soit résolu par une telle poutre lamifiée, le problème du flambage demeure pour des débattements trop importants ; de même, il est facile de vérifier que le comportement à la flexion d'une telle poutre lamifiée n'est pas isotrope ; en fait, bien que le comportement à la flexion de cette poutre soit satisfaisant (mis à part le problème du flambage), suivant une direction perpendiculaire à l'axe de la poutre et au plan des couches de celle-ci, la flexion est impossible suivant un axe perpendiculaire à l'axe de la poutre et parallèle au plan des couches susdites, et ce du fait de l'inertie de ces couches (ou plaques) métalliques par rapport à un axe parallèle au plan défini par chaque plaque.

On pourrait remplacer les plaques métalliques de cette poutre lamifiée par des plaques 3' en matériau composite, dans le but d'éliminer le problème du flambage évoqué plus haut, et ce en tenant compte du fait que l'élasticité des matériaux composites est largement supérieure à celle de l'acier (voir la Fig. 2, où on a représenté la poutre lamifiée correspondante 4).

Cependant, le problème de l'absence de comportement isotrope en flexion demeure même pour la structure lamifiée de la Fig. 2.

Dans le cadre de la présente invention, on propose de remplacer les plaques 3' en matériau composite de la poutre lamifiée de la Fig. 2 par des joncs (ou cordons ou câbles) 5, représentés en section à la Fig. 3, réalisés en matériau composite (tel que fibres de verre/résine époxy ou fibres métalliques noyées dans une matrice de résine époxy) et distribués, par exemple, de façon uniforme dans la masse de la poutre 4', parallèlement à l'axe de celle-ci.

Toutefois, la seule utilisation des cordons 5 n'assure le comportement isotrope souhaité que suivant deux directions perpendiculaires à l'axe de la poutre 4' de la Fig. 3, mais non pas suivant l'axe de cette poutre, en sorte que – toujours dans le cadre de la présente invention – étant donné que les câbles 5, à eux seuls, ne suffisent à satisfaire le but visé par l'invention, on les fait coopérer avec une matrice élastomère ayant une structure particulière, à savoir symétrique par rapport à une direction donnée et susceptible d'être sollicitée en flexion de façon sensiblement isotrope suivant les trois directions d'un repère cartésien d'axes orthogonaux.

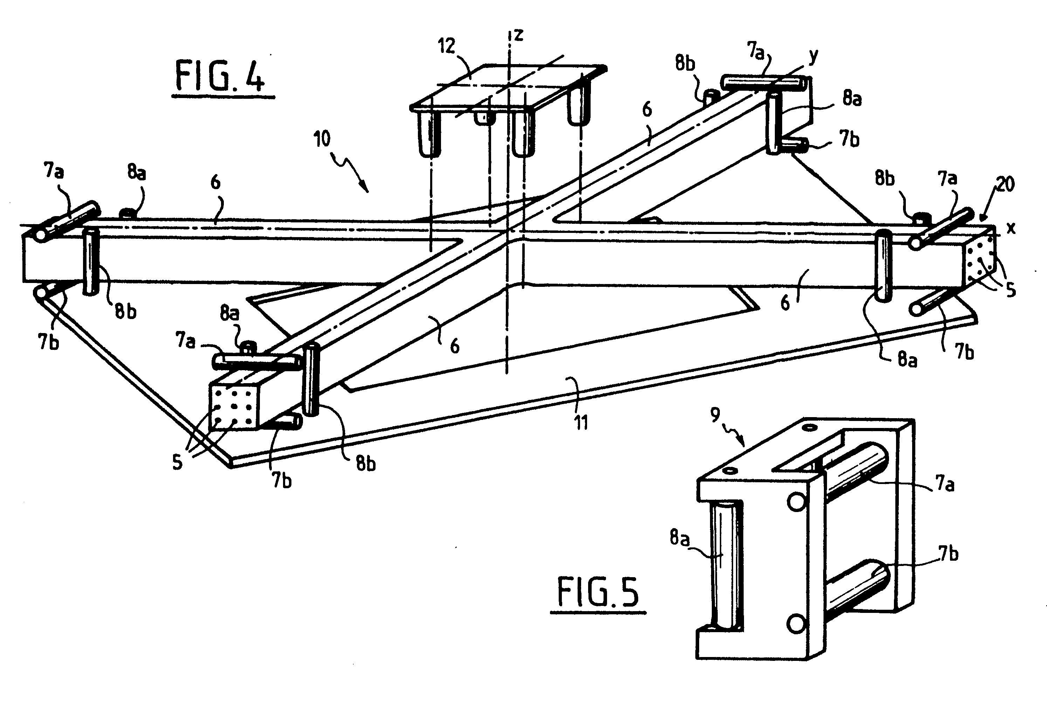

Un mode de réalisation préféré du support élastique, qui tient compte des considérations précédentes, est représenté à la Fig. 4. Le support élastique, pour lequel on a utilisé la référence numérique 10, comporte une matrice élastomère ayant une structure symétrique par rapport à l'axe de symétrie $z$, constituée par une croix à bras 6, égaux et perpendiculaires entre eux. On peut reconnaître dans chaque bras 6 des câbles 5 en matériau composite, distribués de façon uniforme dans chaque bras 6, parallèlement à l'axe du bras correspondant.

A chacune des extrémités des bras de la croix 10 est prévu un dispositif de fixation de ces bras, offrant un appui à la flexion dans l'une quelconque des trois directions orthogonales du repère cartésien défini par l'axe de symétrie $z$ et les axes $x$, $y$ des bras 6 de la croix 10, tout en autorisant un degré de coulissement approprié de chaque bras selon son axe, lorsqu'une sollicitation agissant sur le support élastique 1 présente une composante orientée selon l'axe, $x$ ou $y$, correspondant.

Ce dispositif 20 comporte une paire de rouleaux 7a, 7b perpendiculaires à la fois à l'axe de symétrie $z$ précité et à l'axe, $x$ ou $y$, du bras correspondant, ainsi qu'une paire de rouleaux 8a, 8b parallèles à l'axe de symétrie $z$ et perpendiculaires à l'axe, $x$ ou $y$, du bras correspondant. Les rouleaux 7a, 7b de la première paire et les rouleaux 8a, 8b de la seconde paire sont fixés dans un bâti 9 et espacés de façon à permettre le logement, avec appui et coulissement, de l'extrémité du bras correspondant 6.

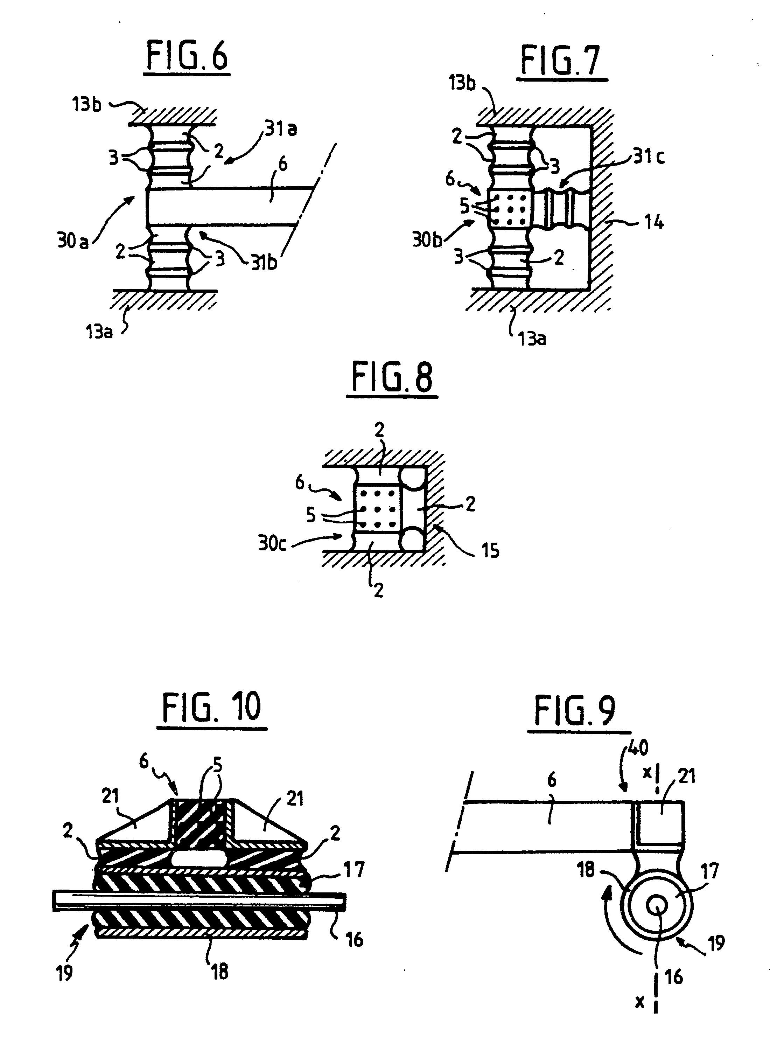

Chaque dispositif de fixation 20 des extrémités des bras 6 du support élastique en forme de croix 10 est donc destiné à être fixé par l'intermédiaire de son bâti 9 (voir la Fig. 5 : à la Fig. 4 les dispositifs 20 sont représentés, pour des raisons de simplification, sans leur bâti 9) a une plaque carrée de support 11 qui présente une ouverture centrale permettant la déformation des bras 6 du support élastique 10 sous l'action d'une sollicitation à priori quelconque. Les bras de ce support sont disposés suivant les diagonales de la plaque 11. On peut remarquer à la Fig. 4 aussi la présence d'un plateau de support 12 d'un dispositif à protéger (non représenté), notamment constitué par du matériel électronique.

Bien entendu, le support élastique 10 est destiné à être fixé par l'intermédiaire de la plaque de support 11, à n'importe quelle paroi d'une structure à priori quelconque, notamment à un plafond, à un plancher, à des cloisons verticales, de même qu'à une table de travail ou à un équipement d'ameublement se trouvant dans cette structure.

La Fig. 6 représente une variante 30a de réalisation du dispositif de fixation 20 comprenant deux dispositifs 31a, 31b à structure lamifiée, disposés avec leurs axes alignés et de part et d'autre d'un bras 6 du support élastique 10, lesquels dispositifs 31a, 31b comportent une pluralité de couches élastomères 2 alternées et adhérisées à des couches de renforcement, qui peuvent être réalisées en métal (voir la référence 3 de la Fig. 6), ou en matériau composite (voir la référence 3' de la Fig. 2), lesquelles couches sont parallèles à l'axe, $x$ ou $y$, du bras correspondant et perpendiculaires à l'axe de symétrie $z$.

Le dispositif de fixation 30b représenté à la Fig. 7 diffère par rapport au dispositif représenté à la Fig. 6 en ce qu'il comporte également un troisième dispositif 31c à structure lamifiée disposé perpendiculairement par rapport à l'axe commun aux dispositifs 31a et 31b, avec ses couches 2 et 3 parallèles à la fois à l'axe, $x$ ou $y$, du bras correspondant et à l'axe de symétrie $z$ du support élastique 10.

Le dispositif 30c de la Fig. 8 diffère par rapport à la Fig. 7 en ce que les dispositifs à structure lamifiée 31a, 31b, 31c sont remplacés essentiellement par des couches élastomères 2 adhérisées à un bâti approprié 15 (les références 13a et 13b de la Fig. 6, ainsi que la référence supplémentaire 14 de la Fig. 7, indiquent les bâtis auxquels sont fixés les dispositifs 31a, 31b et 31c).

Bien entendu, on pourrait utiliser à chacune des extrémités latérales des bras 6 un seul dispositif à structure lamifiée, tel que 31a ; de même, en ce qui concerne la Fig. 8, on pourrait utiliser deux couches élastomères ou même une seule couche élastomère au lieu des trois couches qui y sont représentées.

La Fig. 9 représente une variante 40 de réalisation du dispositif de fixation des extrémités des bras 6 du support élastique 10 selon l'invention permettant, en plus, de régler la fréquence d'oscillation propre du support élastique 10, tout en évitant de lui faire atteindre la fréquence de résonance.

Le dispositif de fixation 40 comporte une structure lamifiée 19 à couches cylindriques, constituée par un arbre central 16, une couche élastomère cylindrique 17 et une couche métallique cylindrique 18, l'arbre 16 étant perpendiculaire à l'axe, $\underline{x}$ ou $\underline{y}$, du bras correspondant 6 et à l'axe de symétrie $\underline{z}$.

La Fig. 10, qui est une vue en coupe suivant le plan X-X de la Fig. 9, montre que la structure lamifiée cylindrique 19 est disposée symétriquement par rapport au plan passant par l'axe, $\underline{x}$ ou $\underline{y}$, de chaque bras 6 et l'axe de symétrie $\underline{z}$, de manière à dépasser, de part et d'autre de ce plan, l'encombrement transversal de chaque bras 6. Ce dernier est relié à la structure lamifiée cylindrique 19, notamment à la couche métallique cylindrique 18, par l'intermédiaire de deux couches élastomères 2, qui sont disposées symétriquement par rapport au plan de symétrie de la structure 19 et qui sont parallèles à l'axe, $\underline{x}$ ou $\underline{y}$, du bras correspondant 6 et perpendiculaires à l'axe de symétrie $\underline{z}$.

Chaque couche 2 est reliée à l'extrémité d'un bras 6 au moyen de deux équerres 21 entre lesquelles cette extrémité est emprisonnée (adhérisée).

Il est clair que, pour la structure symétrique de la matrice élastomère représentée à la Fig. 4, on peut adopter une configuration différente d'une croix 10 à bras égaux et perpendiculaires entre eux, pourvu que la structure soit susceptible, conformément à l'invention, d'être soumise à flexion suivant n'importe quelle direction d'un repère spatial cartésien d'axes orthogonaux, et ce de façon sensiblement isotrope pour au moins deux directions de ce repère. En particulier, on peut facilement imaginer une structure en forme d'étoile à rayons égaux, dans lesquels les câbles 5 en matériau composite sont noyés parallèlement à l'axe correspondant. De même, on pourrait imaginer d'adopter une configuration en forme de disque dans lequel les câbles 5 précités sont noyés de façon à être disposés dans des plans différents et (dans chaque plan) suivant une étoile. De même, on pourrait penser d'obtenir le réglage de la fréquence d'oscillation propre du support élastique suivant l'invention, par l'adoption d'un dispositif permettant le pincement des extrémités des bras 6 de la structure en forme de croix 10 et obtenu à partir notamment de la configuration illustrée à la Fig. 6, dans laquelle l'un des deux dispositifs à structure lamifiée, 31a ou 31b, au lieu d'être fixe est susceptible d'être soumis à l'action, par exemple, d'un vérin assurant une compression qui serait destinée à ralentir le mouvement de coulissement du bras 6 correspondant.

En outre, on peut tenir compte du fait que pour une sollicitation (charge) donnée, notamment de valeur unitaire, le débattement (ou déformation) de chaque bras de la croix 10 est fonction de plusieurs paramètres, tels que :
- le module de flexion des câbles en matériau composite,
- le diamètre de ces câbles,
- le nombre de ces mêmes câbles,
- l'aire de la section de la matrice élastomère délimitée par les câbles disposés à la partie la plus externe dans cette matrice,
- le module de cisaillement de la matrice élastomère,
- la distance entre les appuis à la flexion, et ce pour adapter les performances du support élastique selon l'invention aux exigences imposées par les différents cahiers des charges.

De plus, il est clair que la composition des matériaux composites susceptible d'être utilisée dans le cadre de la présente invention n'est pas limitative : d'une façon générale, on peut utiliser des matériaux composites thermodurcissables renforcés et thermoplastiques renforcés.

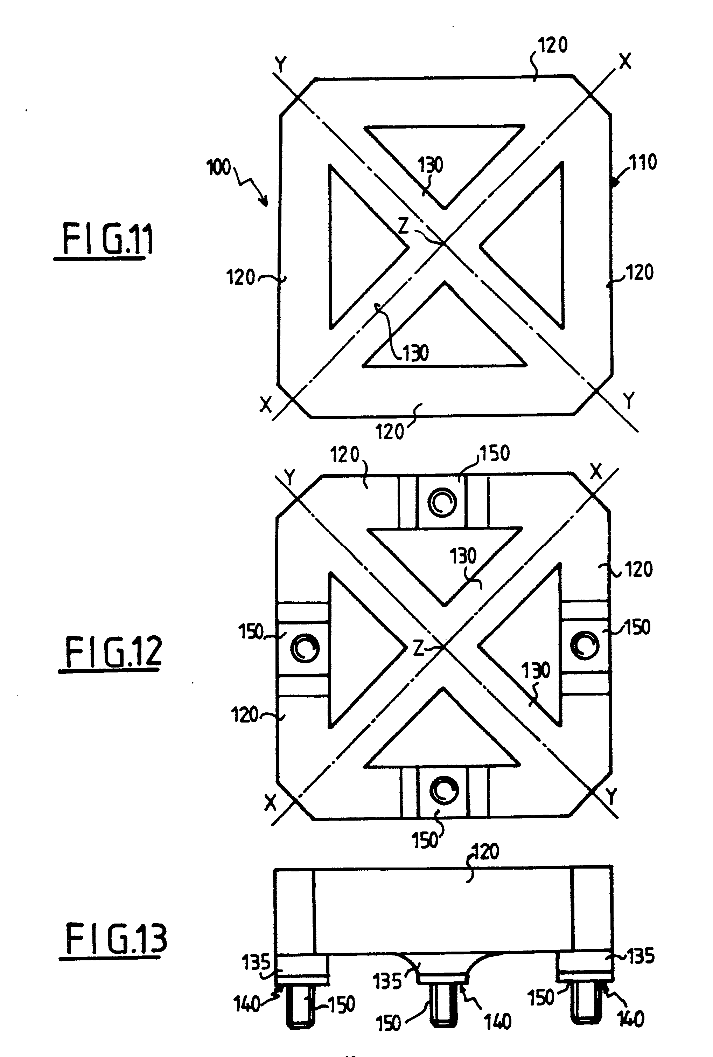

Les figures 11 à 13 illustrent un support élastique 100 dont le comportement à la flexion est sensiblement isotrope suivant deux directions d'un repère d'axes orthogonaux (qui sera défini ci-après), quelle que soit la direction d'une sollicitation agissant sur le support dans ce repère.

Ce support comporte :
- une matrice élastomère 110 ayant une structure aplatie symétrique et en forme d'anneau carré, à angles abattus (ou tronqués), pourvu de ses quatre côtés 110 et de ses deux diagonales 130,
- une pluralité de câbles en matériau composite, noyés de façon uniforme dans les côtés 120 et les diagonales 130 de la matrice élastomère 110 (comme les câbles 5 illustrés à la Fig. 3),
- une pluralité de dispositifs de fixation 140 autorisant un degré de coulissement approprié de chaque diagonale de la matrice, lorsque la sollicitation présente une composante suivant la diagonale correspondante, tout en offrant un appui à la flexion dans l'une quelconque des trois directions du repère précité.

Le repère d'axes orthogonaux est défini par un axe z, qui est l'axe de symétrie de la matrice élastomère carrée 110 perpendiculaire au plan de celle-ci, et deux axes x et y qui sont les axes de symétrie des diagonales 130 de la matrice susdite.

On peut redéfinir la structure symétrique de la matrice élastomère 110 du support élastique selon la présente invention comme une croix à bras 130 égaux et perpendiculaires entre eux dont les extrémités sont reliées par des segments définissant les côtés 120 d'un carré, dont les diagonales 130 sont constituées par les deux bras de la croix précitée.

Les dispositifs de fixation 140 illustrés aux figures 12 et 13 comportent une couche élastomère 135 disposée à la partie inférieure et dans la zone médiane des côtés 120 de la matrice 110. Chaque couche élastomère 135 est adhérisée, d'une part, au côté correspondant de la matrice et, d'autre part, à un plot 150 destiné à être fixé à une plaque carrée de support de l'ensemble (qui peut être du type défini par la référence numérique 11 à la Fig. 4, cette plaque présentant une ouverture centrale permettant la déformation des diagonales 130 du support élastique 100 sous l'action d'une sollicitation a priori quelconque).

Il va de soi, que les dispositifs de fixation peuvent être réalisés selon l'une quelconque des autres structures illustrées aux Fig. 6 à 8. De même, les dispositifs de fixation du support élastique 100 peuvent être équipés de moyens de réglage de sa fréquence d'oscillation propre, comme illustré dans les Fig. 9 et 10.

Etant donné que les câbles 5 – qui sont distribués dans la masse élastomère des côtés 120 et des diagonales 130 de la matrice 110 parallèlement aux axes de ceux-ci – sont indépendants, il est avantageux de solidariser ces câbles au niveau de leurs extrémités convergentes à l'aide de deux plaques, notamment métalliques, adhérisées aux faces (parties) inférieure et supérieure de la matrice élastomère, dans les zones de croisement de chaque diagonale 130 avec les côtés 120 convergents correspondants : de cette manière il est possible d'assurer la coopération des câbles 5 au niveau de leurs extrémités convergentes et donc la continuité dans la transmission des efforts.

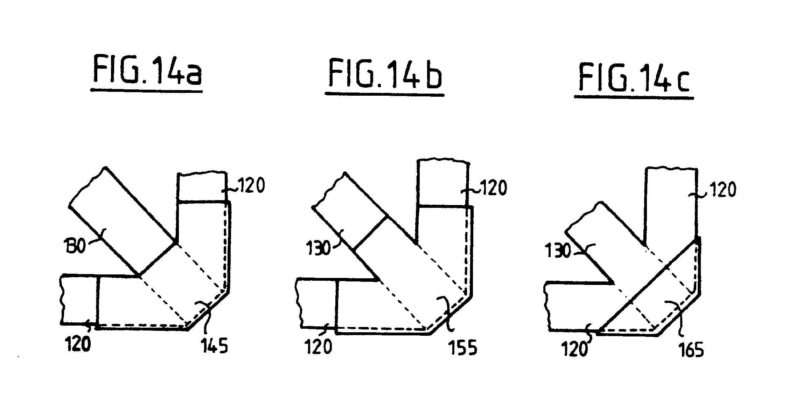

Les Fig.14a à 14c représentent des variantes 145, 155 et 165 pour la configuration de chaque plaque de solidarisation, qui diffèrent essentiellement pour l'étendue de la zone de solidarisation qui peut intéresser en totalité (cf. la Fig. 14a) ou en partie (cf. la Fig. 14c) la zone de croisement des côtés 120 avec chaque diagonale 130, ou qui peut encore se prolonger en partie sur cette diagonale (cf. la Fig. 14b).

On peut profiter de la présence des plaques de solidarisation 145, 155 ou 165 pour suspendre à chaque angle de la matrice 110 une masse métallique de poids approprié (non représentée, mais pouvant être réalisée en tout autre matériau) constituant un moyen efficace de réglage de la fréquence d'oscillation propre du support élastique 100.

Bien entendu, un plateau (non représenté, mais qui peut être, par exemple, du type défini par la référence numérique 12 à la Fig. 4), – qui est destiné à supporter un dispositif à protéger, notamment constitué par du matériel électronique embarqué –, peut être rapporté dans la zone de croisement des diagonales 130 de la matrice élastomère 110.

Il est facile de vérifier que le support élastique illustré aux Fig. 11 à 14 satisfait simultanément aux exigences suivantes, auxquelles satisfait également le support illustré à la Fig. 4 :
   – obtention de débattements importants, sous faible charge et pour un encombrement donné,
   – absence de flambage, et
   – comportement sensiblement isotrope suivant les deux directions x, y du repère d'axes orthogonaux x, y, z précité,
   ainsi qu'à l'exigence suivante, qui consiste dans une
   – raideur sensiblement inférieure suivant l'une quelconque des trois directions du repère d'axes x, y, z, par rapport à la structure en forme de croix de la matrice élastomère décrite plus haut.

Cette diminution de raideur est due au fait que les dispositifs de fixation 140 ne sont pas disposés dans les zones d'extrémité des diagonales 130 (contrairement à la solution adoptée dans le cas où la matrice élastomère a la configuration d'une simple croix à bras égaux et perpendiculaires entre eux, correspondant aux diagonales de la structure carrée objet des Fig. 11 et 12), mais en dehors de ces zones de façon à augmenter la souplesse des diagonales. Cette condition est rendue possible grâce à la présence des côtés 120 de la matrice carrée 110 qui permettent de placer lesdits dispositifs de fixation 140 dans les zones médianes des côtés 120 : de cette manière on bénéficie – et ce pour l'une quelconque des directions du repère précité – d'une plus grande souplesse en ce qui concerne les diagonales et d'une souplesse additionnelle correspondant aux demi-longueurs des côtés 120 reliant les extrémités de chaque diagonale 130 aux dispositifs de fixation 140.

Bien que les dispositifs de fixation 140 autorisant la sollicitation en flexion des câbles 5 (notamment noyés dans les diagonales 130 de la matrice élastomère 110) – suivant l'une quelconque des trois directions x, y et z d'un repère cartésien, dont deux directions x et y sont définies par les axes des deux diagonales, alors que la troisième direction z est perpendiculaire au plan défini par celles-ci – aient été représentés comme des dispositifs autorisant un degré de coulissement de chaque diagonale 130 selon l'axe correspondant, x ou y (ces dispositifs pouvant être remplacés par n'importe quelle variante illustrées dans les Fig. 6 à 8, on peut facilement comprendre que ces dispositifs de fixation précités peuvent être constitués essentiellement par des dispositifs fournissant uniquement un appui à la flexion, sans coulissement, étant donné qu'un degré de "coulissement intrinsèque" est assuré par la souplesse des demi-bras 120 de liaison des extrémités des diagonales 130 aux dispositifs eux-mêmes.

Le fait de réaliser ces derniers avec possibilité de coulissement est donc facultatif et ne sert qu'à augmenter le degré de "coulissement intrinsèque", tel que défini ci-dessus.

En outre, bien qu'à la figure 3 les câbles 5 sont représentés comme étant distribués dans la section de chaque segment de la matrice élastomère de manière que deux câbles consécutifs présentent le même espacement mutuel suivant les deux directions parallèles aux côtés de la section précitée, il est aussi possible d'imaginer une distribution différente. En particulier, il peut être avantageux que deux câbles consécutifs, qui se suivent suivant une première direction qui est contenue dans un plan transversal perpendiculaire aux câbles et qui est perpendiculaire à un plan longitudinal orthogonal par rapport audit plan transversal, présentent un espacement mutuel qui est différent par rapport à l'espacement existant entre deux câbles consécutifs qui se suivent suivant une deuxième direction, qui est contenue dans le même plan transversal précité et qui est perpendiculaire à ladite première direction, cette distribution des câbles permettant d'ajuster la rigidité en flexion, suivant l'une quelconque des trois directions dudit repère, à des valeurs préfixées.

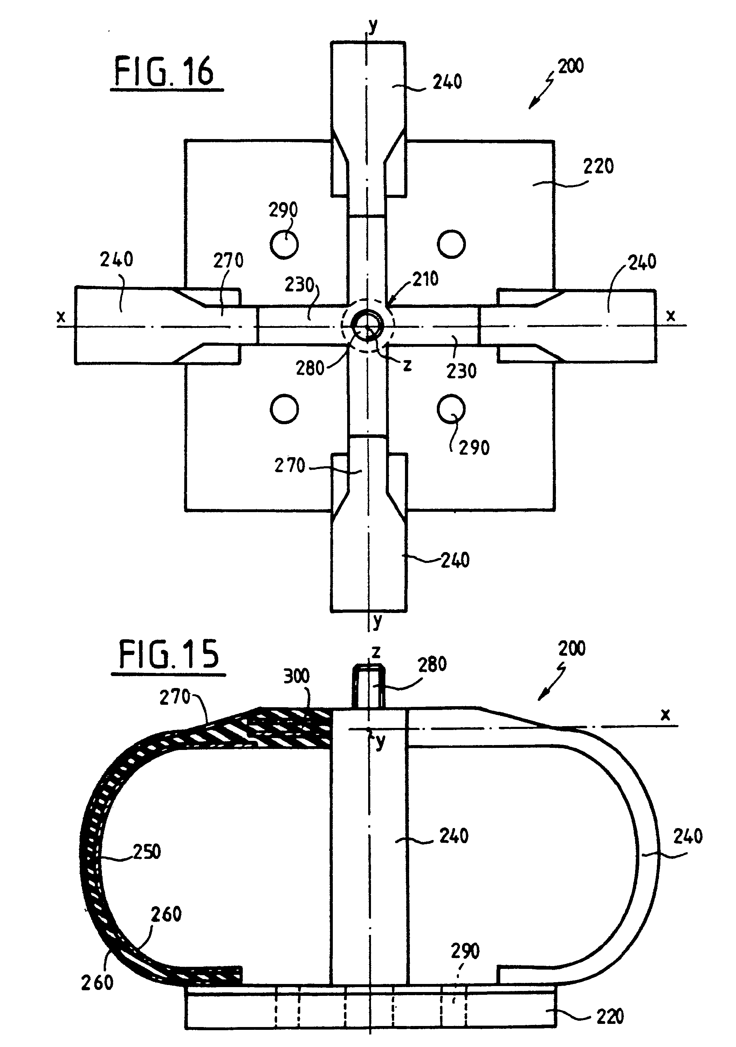

Les Fig. 15 et 16 illustrent un support élastique 200 qui comporte :

– une matrice élastomère 210 en forme de croix (comme celle illustrée à la Fig. 4),

– une pluralité de câbles en matériau composite noyés dans les bras 230 de la croix 210 (comme les câbles 5 illustrés à la Fig. 3),

– une pluralité de dispositifs de fixation 240 constitués chacun d'un ressort à lame disposé à chaque extrémité d'un bras 230 dans le prolongement de celui-ci et ayant sensiblement la configuration d'un arc de circonférence ou d'ellipse (bien entendu, cette configuration des lames des ressorts n'est pas limitative et d'autres sont susceptibles d'être adoptées, par exemple en S ; en outre, plusieurs configurations du même type ou de type différent peuvent être combinées entre elles pour chaque ressort en les superposant).

Les extrémités inférieures de chaque ressort à lame 240 sont fixées à une plaque 220 qui, à son tour, est destinée à être fixée à la paroi d'une structure appropriée, telle que précisée plus haut, notamment par l'intermédiaire de boulons (non représentés) passant par les orifices 290.

Une structure préférée de chaque lame 240 est celle illustrée en section à la Fig. 15. On peut y distinguer une âme 250 constituée par une couche en élastomère disposée en sandwich entre deux couches externes 260 en matériau composite, tel que fibres de verre/résine époxy par exemple.

Une variante de cette structure préférée consiste a réaliser la couche centrale en matériau composite et les couches externes en élastomère.

Dans chaque cas, les câbles 5 peuvent avantageusement se prolonger légèrement aux extrémités des bras 230 de la croix 210 dans la couche centrale des lames des ressorts de fixation correspondants 240.

On peut remarquer à la Fig. 15 que chaque lame 240 est reliée au bras 230 correspondant par une portion de raccordement 270 qui permet, d'une part, de passer graduellement de l'épaisseur du bras à celle de la lame et, d'autre part, de donner à cette dernière la largeur la plus appropriée : à la Fig. 16 l'on peut apprécier que cette largeur est sensiblement supérieure à celle des bras de la croix.

Au centre de la croix 210 est disposé un plot 280 qui fait saillie suivant la direction de l'axe z (les axes x et y du repère d'axes orthogonaux étant constitués par les axes longitudinaux des bras 230) et qui est destiné à recevoir la charge utile à supporter.

Etant donné que normalement l'on recherche la plus faible rigidification dynamique d'un support élastique, il est avantageux d'utiliser pour le support 200 un élastomère ayant un très bas coefficient d'amortissement, par exemple constitué par du caoutchouc naturel.

Toutefois, dans certaines applications existe le risque de résonance avec les vibrations imposées par la charge dynamique.

Pour concilier ces deux exigences contradictoires, l'on préconise de limiter l'utilisation d'un élastomère à très bas coefficient d'amortissement à la seule matrice 210 de support 200 (tel que défini par la référence numérique 300 dans la Fig. 15), tandis que pour les lames 240 de chaque ressort composite de fixation de la matrice il est préférable d'utiliser un élastomère 250 présentant un coefficient d'amortissement relativement élevé.

Dans certaines applications, notamment lorsque les dimensions d'encombrement de la charge utile à supporter sont relativement importantes, pour éviter que cette charge vienne en butée contre les lames des ressorts de fixation, l'on préfère réaliser le support élastique 200 de manière à séparer chacun des quatre bras 230 de la matrice 210 – conjointement avec le ressort correspondant 240 – par rapport aux autres couples bras/ressort (cette variante n'est pas représentée parce qu'elle découle immédiatement de celle correspondant aux Fig. 15 et 16).

Les extrémités de ces bras de la matrice ainsi divisée, avec leurs ressorts, sont destinées à être reliées à quatre extrémités de la charge à supporter. Bien entendu, les quatre couples bras/ressort ainsi définis sont orientés deux à deux suivant les deux directions x, y du repère (x, y, z) précité. Cela peut être obtenu de deux manières différentes, soit en disposant les quatre couples bras/ressort en X, suivant deux diagonales (et aux extrémités de ces diagonales) d'une embase d'appui du matériel à supporter constituant la charge utile, soit en disposant les quatre couples bras/ressort en croix, l'axe de chaque couple étant disposé parallèlement à un côté de l'embase d'appui précitée pour des raisons d'encombrement.

Dans chaque cas, le support élastique dont la matrice élastomère est fixée par des ressorts à lame présente les propriétés suivantes :

– une raideur faible suivant l'axe z, avec possibilité de grands débattements ;

– une raideur transversale, à savoir suivant les axes x et y, également faible grâce à la coopération des bras de la croix sollicités en flexion avec les ressorts d'extrémité qui s'enroulent et se déroulent sous l'action de la charge dynamique, cette raideur transversale étant sensiblement isotrope suivant les deux axes x et y ;

– faible rigidification dynamique grâce au faible coefficient d'amortissement de l'élastomère utilisé dans la matrice en forme de croix et au choix d'un élastomère à coefficient d'amortissement relativement élevé dans les lames des ressorts, ce choix ayant comme résultat que l'effet de "batteur mécanique" de chaque ressort composite soit sans préjudice sur la raideur dynamique, parce qu'il permet de l'amortir.

## Revendications

1. Support élastique pour une charge, comprenant :

– une structure élastomère (10 ; 110 ; 210) constituée par une pluralité de bras en matière élastomère (6 ; 130 ; 230), cette structure (10 ; 110 ; 210) étant symétrique par rapport à un axe donné (z) et autorisant par une déformation desdits bras (6, 130, 230) un débattement de la charge suivant les trois directions d'un repère d'axes dans l'espace (x, y, z) ;

– une pluralité de dispositifs de fixation (20 ; 30a ; 30b ; 30c ; 40 ; 140 ; 240) de la structure (10 ; 110 ; 210) ; lequel support est caractérisé en ce qu'il comprend une pluralité de câbles (5) en matériau composite noyés dans les bras (6 ; 130 ; 230) de la structure élastomère (10 ; 110 ; 210) parallèlement à leurs axes longitudinaux, et en ce que les dispositifs de fixation présentent une configuration autorisant une sollicitation en flexion des câbles précités (5) suivant deux directions perpendiculaires à la direction définie par les câbles (5) et constituant avec cette dernière ledit repère d'axes dans l'espace (x, y, z) comprenant l'axe de symétrie (z) de la structure précitée.

2. Support élastique selon la revendication 1, caractérisé en ce que la structure élastomère est définie par une matrice symétrique en forme de croix (10 ; 210), à bras (6 ; 230) égaux et perpendiculaires entre eux et à l'axe de symétrie (z) de la matrice, leurs axes longitudinaux étant orientés suivant les deux directions (x, y) du repère précité, lesdits câbles (5) étant noyés dans les bras (6 ; 230) de la croix (10) parallèlement à l'axe (x, y) de ces derniers, un dispositif de fixation (20 ; 30a ; 30b ; 40 ; 240) étant prévu à l'extrémité latérale de chaque bras (6 ; 230) et offrant un appui à la flexion suivant deux directions perpendiculaires à l'axe du bras correspondant.

3. Support élastique selon la revendication 2, caractérisé en ce que chaque dispositif de fixation d'extrémité est constitué par au moins un ressort à lame (240) disposé sur le prolongement de chaque bras (230) de la matrice (210).

4. Support élastique selon la revendication 1, caractérisé en ce que la structure élastomère (210) est divisée et comprend au moins quatre bras (230) séparés, dans lesquels lesdits câbles (5) sont noyés parallèlement à l'axe longitudinal de ces bras et dont une extrémité est destinée à être reliée à une charge utile à supporter, tandis que l'autre extrémité est reliée à un dispositif de fixation constitué par au moins un ressort à lame (240) disposé sur le prolongement du bras correspondant (230) de la structure divisée, les quatre bras étant orientés deux à deux suivant deux autres directions du repère précité.

5. Support élastique selon l'une quelconque des revendications 3 ou 4, caractérisé en ce que chaque ressort à lame (240) présente un profil sensiblement défini par un arc de circonférence.

6. Support élastique selon l'une quelconque des revendications 3 ou 4, caractérisé en ce que chaque ressort à lame présente un profil sensiblement défini par un arc d'ellipse.

7. Support élastique selon l'une quelconque des revendications 3 ou 4, caractérisé en ce que chaque lame (240) comprend une couche centrale (250) en matériau élastomère comprise entre deux couches externes (260) en matériau composite.

8. Support élastique selon l'une quelconque des revendications 3 ou 4, caractérisé en ce que chaque lame comprend une couche centrale en matériau composite comprise entre deux couches externes en matériau élastomère.

9. Support élastique selon l'une quelconque des revendications 7 ou 8, caractérisé en ce que la matrice (210) est réalisée en un élastomère (300) présentant un très bas coefficient d'amortissement, alors que chaque lame (240) comporte un élastomère (250) présentant un coefficient d'amortissement relativement élevé.

10. Support élastique selon la revendication 1, caractérisé en ce que la structure élastomère (110) est définie par une matrice symmétrique en forme d'anneau carré pourvu de diagonales (130), les câbles (5) en matériau composite étant noyés dans chacun des côtés (120) et dans chacune des diagonales (130) de la matrice parallèlement à leurs axes correspondants et en ce que des dispositifs de fixation (140) sont disposé dans la zone médiane des côtés (120) de la matrice (110), lesquels dispositifs de fixation autorisent la sollicitation en flexion des câbles suivant deux directions perpendiculaires à la direction définie par les câbles.

11. Support élastique selon l'une quelconque des revendications 2, 4 ou 10, caractérisé en ce que deux câbles (5) consécutifs, se suivent selon une première direction, qui est contenue dans un plan transversal perpendiculaire aux câbles (5) et qui est perpendiculaire à un plan longitudinal orthogonal par rapport audit plan transversal –, présentent un espacement mutuel qui est différent par rapport à l'espacement existant entre deux câbles (5) consécutifs se suivant selon une deuxième direction –, qui est contenue dans le même plan transversal précité et qui est perpendiculaire à ladite première direction –, cette distribution des câbles (5) permettant d'ajuster la rigidité en flexion, suivant l'une quelconque des trois directions (x, y, z) dudit repère, à des valeurs préfixées.

12. Support élastique selon la revendication 10, caractérisé en ce que les zones de croisement de chaque diagonale (130) de la matrice (110) avec les côtés (120) de celle-ci, sont équipées à la partie inférieure et supérieure de plaques de solidarisation (145, 155, 165) des extrémités convergentes des câbles (5) noyés dans les diagonales et dans les côtés précités, lesdites plaques étant adhérisées à la matrice élastomère (110).

13. Support élastique selon la revendication 2, caractérisé en ce que ledit dispositif de fixation (40) comporte également un moyen (19) permettant le réglage de la fréquence d'oscillation propre du support élastique (10).

14. Support élastique selon la revendication 13, caractérisé en ce que le moyen permettant le réglage de la fréquence d'oscillation propre du support élastique (10) comporte une structure lamifiée (19) à couches cylindriques constituée par un arbre central (16) et au moins une succession de couches comprenant une couche élastomère cylindrique (17) (adhérisée à cet axe) et une couche cylindrique métallique (18), (adhérisée à cette couche élastomère), l'arbre (16) étant perpendiculaire à l'axe (x ou y) du bras correspondant (6) et étant disposé d'un côté de l'extrémité du bras correspondant (6) et symétriquement par rapport à un plan passant par l'axe (x ou y) de ce bras (6) et l'axe de symétrie (z), de manière à dépasser de part et d'autre l'encombrement transversal du bras correspondant (6), dont l'extrémité est reliée à la structure lamifiée cylindrique (19) par deux couches élastomères (2), qui sont disposées de part et d'autre par rapport audit plan de symétrie de cette structure lamifiée cylindrique (19) et qui sont adhérisées à des équerres (21), entre lesquelles est emprisonnée (adhérisée) l'extrémité du bras correspondant (6).

15. Support élastique selon l'une quelconque des revendications 2, 3 ou 10 caractérisé en ce que des masses de poids approprié sont disposées aux quatre angles de la matrice élastomère (10, 110, 210) pour permettre le réglage de la fréquence d'oscillation propre du support élastique (10, 100, 200).

16. Support élastique selon la revendication 2, caractérisé en ce que chaque dispositif de fixation (20) comporte une paire de rouleaux (7a, 7b), perpendiculaires à la fois à l'axe de symétrie précité (z) et à l'axe (x ou y) du bras correspondant (6), ainsi qu'une paire de rouleaux (8a, 8b) parallèles à l'axe de symétrie (z) et perpendiculaires à l'axe (x ou y) dudit bras correspondant (6), les rouleaux (7a, 7b ; 8a, 8b) de chaque paire étant fixés dans un bâti (9) et espacés de façon à permettre le logement, avec appui et coulissement, de l'extrémité de ce bras (6).

17. Support élastique selon la revendication 2, caractérisé en ce que chaque dispositif de fixation (30a ; 30b) comporte au moins un dispositif à structure lamifiée (31a ; 31b ; 31c) disposé d'un côté du bras correspondant, à une extrémité de celui-ci, ce dispositif à structure lamifiée comportant une pluralités de couches élastomères (2) alternées et adhérisées à des couches de renforcement (3), lesquelles couches (2, 3) sont parallèles à l'axe (x ou y) du bras correspondant (6) et perpendiculaires à l'axe de symétrie (z), chaque dispositif à structure lamifiée étant fixé à un bâti (13a, 13b, 14).

18. Support élastique selon la revendication 17, caractérisé en ce que l'extrémité de chaque bras (6) est pourvue de deux dispositifs à structure lamifiée (31a, 31b) du type précité, disposés de part et d'autre par rapport à ladite extrémité.

19. Support élastique selon la revendication 17, caractérisé en ce que chacune des extrémités des bras (6) comporte trois dispositifs à structure lamifiée (31a, 31b, 31c) du type susdit, dont deux dispositifs (31a, 31b) sont disposés de part et d'autre par rapport à l'extrémité du bras correspondant (6), avec leurs axes alignés et leurs couches parallèles à l'axe (x ou y) du bras correspondant (6) et perpendiculaires à l'axe de symétrie (z), tandis que le troisième dispositif (31c) est disposé avec son axe perpendiculaire à l'axe commun des deux premiers dispositifs (31a, 31b) et avec ses couches parallèles à la fois à l'axe (x ou y) du bras correspondant (6) et à l'axe de symétrie (z).

20. Support élastique selon la revendication 2, caractérisé en ce que chaque dispositif de fixation (30c) est constitué par au moins une couche élastomère (2) disposée d'un côté du bras correspondant (6) à une extrémité de celui-ci.

21. Support élastique selon la revendication 20, caractérisé en ce que l'extrémité de chaque bras (6) est pourvue de deux couches élastomères (2) parallèles à l'axe (x ou y) du bras correspondant (6) et perpendiculaires à l'axe de symétrie (z), lesquelles couches (2) sont fixées à un bâti (15).

22. Support élastique selon la revendication 21, caractérisé en ce que l'extrémité de chaque bras (6) est pourvue de trois couches élastomères (2) dont deux couches sont disposées parallèlement à l'axe (x ou y) et perpendiculairement à l'axe de symétrie (z) de part et d'autre par rapport à l'extrémité dudit bras correspondant (6), avec leurs axes alignés, tandis que la troisième couche est disposée parallèlement à la fois à l'axe (x ou y) du bras correspondant (6) et à l'axe de symétrie (z), avec son axe perpendiculaire à l'axe commun des deux premières couches.

## Claims

1. Resilient support for a load, characterized in that it comprises :
   – an elastomer structure (10, 110, 210) formed by a plurality of elastomer material arms (6 ; 130 ; 230), this structure (10 ; 110 ; 210) being symmetrical with respect to a given axis (z) and allowing by deformation of said arms (6 ; 130 ; 230) a deflection of the load in the three directions of a reference frame of axes in space (x, y, z),
   – a plurality of devices (20 ; 30a ; 30b ; 30c ; 40, 140, 240) for fixing the structure (10, 110, 210), which support is characterized in that it comprises a plurality of composite material cables (5) embedded in said arms (6 ; 130 ; 230) of the elastomer structure (10 ; 110 ; 210) parallel to their longitudinal axes and in that the fixing devices have a configuration allowing said cables (5) to be stressed in two directions perpendicular to the direction defined by the cables (5) and forming with the latter said reference frame of axes in space (x, y, z) comprising the axis of symmetry (z) of said structure.

2. Resilient support according to claim 1, characterized in that the elastomer matrix has a symmetrical structure in the form of a cross (10, 210), with equal arms (6 ; 230) perpendicular to each other and to the axis of symmetry (z) of the matrix, their longitudinal axes being oriented in the two directions (x, y) of said reference frame, said cables (5) being embedded in the arms (6 ; 230) of the cross (10) parallel to the axis (x, y) of the latter, a fixing device (20 ; 30a ; 30b ; 30c; 40 ; 240) being provided at the lateral end of each arm (6 ; 230) and offering support for flexion in two directions perpendicular to the axis of the corresponding arm.

3. Resilient support according to claim 2, characterized in that each end fixing device is formed by at least one blade spring (240) disposed on the extension of each arm (230) of the matrix (210).

4. Resilient support according to claim 1, characterized in that the elastomer matrix (210) is divided and comprises at least four separate arms (230), in which said cables (5) are embedded parallel to the longitudinal axis of these arms and one end of which is intended to be connected to a useful load to be supported, whereas the other end is connected to a fixing device formed by at least one blade spring (240) disposed on the extension of the corresponding arm (230) of the divided structure, the four arms being oriented two by two in two other directions of said reference frame.

5. Resilient support according to any one of claims 3 or 4, characterized in that each blade spring (240) has a profile substantially defined by an arc of circumference.

6. Resilient support according to any one of claims 3 or 4, characterized in that each blade spring has a profile substantially defined by an arc of ellipse.

7. Resilient support according to any one of claims 3 or 4, characterized in that each blade (240) comprises a central elastomer material layer (250) between two external composite material layers (260).

8. Resilient support according to any one of claims 3 or 4, characterized in that each blade comprises a central composite material layer between two external elastomer material layers.

9. Resilient support according to any one of claims 7 or 8, characterized in that the matrix (210) is made from an elastomer (300) having a very low damping coefficient, whereas each blade (240) comprises an elastomer (250) having a relatively high damping coefficient.

10. Resilient support according to claim 1, characterized in that the elastomer matrix (110) has a symmetrical structure in the form of a square ring with diagonals (130), the composite material cables (5) being embedded in each of the sides (120) and in each of the diagonals (130) of the matrix parallel to their corresponding axes and in that fixing devices (140) are disposed in the median zone of the sides (120) of the matrix (110), which fixing devices allow the cables to be stressed under flexion in two directions perpendicular to the direction defined by the cables.

11. Resilient support according to any one of claims 2, 4 or 10, characterized in that two consecutive cables (5), following each other in a first direction which is contained in a transverse plane perpendicular to the cables (5) and which is perpendicular to a longitudinal plane orthogonal to said transverse plane, have mutual spacing which is different with respect to the spacing existing between two consecutive cables (5) following each other in a second direction which is contained in the same above mentioned transverse plane and which is perpendicular to said first direction, this distribution of the cables (5) making it possible to adjust the rigidity under flexion in any one of the three directions (x, y, z) of said reference frame, to preset values.

12. Resilient support according to claim 10, characterized in that the crossing zones of each diagonal (130) of the matrix (110) with the sides (120) thereof are equipped at the lower and upper part with blades (145, 155, 165) for fixing the convergent ends of the cables (5) embedded in the diagonals and in said sides, said plates being adhered to the elastomer matrix (110).

13. Resilient support according to claim 2, characterized in that said fixing device (40) also comprises a means (19) for regulating the natural oscillation frequency of the resilient support (10).

14. Resilient support according to claim 13, characterized in that the means for regulating the natural oscillation frequency of the resilient support (10) comprises a laminate structure (19) with cylindrical layers formed by a central shaft (16) and at least one succession of layers comprising a cylindrical elastomer layer (17) (adhered to this shaft) and a metal cylindrical layer (18) (adhered to this elastomer layer), the shaft (16) being perpendicular to the axis (x or y) of the corresponding arm (6) and being disposed on one side of the end of the corresponding arm (6) and symmetrically with respect to a plane passing through the axis (x or y) of this arm (6) and the axis of symmetry (z), so as to project on each side of the transverse dimension of the corresponding arm (6) whose end is connected to the cylindrical laminate structure (19) by two elastomer layers (2) which are disposed on each side of said plane of symmetry of this cylindrical laminate structure (19) and which are adhered to brackets (21) between which the end of the corresponding arm (6) is imprisoned (adhered).

15. Resilient support according to any one of claims 2, 3 or 10, characterized in that masses of appropriate weight are disposed at the four corners of the elastomer matrix (10, 110, 210) for making possible the regulation of the natural oscillation frequency of the resilient support (10, 100, 200).

16. Resilient support – according to claim 2, characterized in that each fixing device (20) comprises a pair of rollers (7a, 7b) perpendicular both to said axis of symmetry (z) and to the axis (x or y) of the corresponding arm (6), as well as a pair of rollers (8a, 8b) parallel to the axis of symmetry (z) and perpendicular to the axis (x or y) of the corresponding arm (6), the rollers (7a, 7b, 8a, 8b) of each pair being fixed in a frame (9) and spaced so that the end of this arm (6) can be housed with support and sliding.

17. Resilient support according to claim 2, characterized in that each fixing device (30a ; 30b) comprises at least one laminate structure device (31a ; 31b ; 31c) disposed on one side of the corresponding arm, at one end thereof, this laminate structure device comprising a plurality of alternate elastomer layers (2) adhered to reinforcement layers (3), which layers (2, 3) are parallel to the axis (x or y) of the corresponding arm (6) and perpendicular to the axis of symmetry (z), each laminate structure device being fixed to a frame (13a, 13b, 14).

18. Resilient support according to claim 17, characterized in that the end of each arm (6) is provided with two laminate structure devices (31a, 31b) of the above mentioned type, disposed on each side of said end.

19. Resilient support according to claim 17, characterized in that each of the ends of the arms (6) comprises three laminate structure devices (31a, 31b, 31c) of said type, two devices (31a, 31b) of which are disposed on each side of the end of the corresponding arm (6) with their axes aligned and their layers parallel to the axis (x or y) of the corresponding arm (6) and perpendicular to the axis of symmetry (z), whereas the third device (31c) is disposed with its axis perpendicular to the common axis of the first two devices (31a, 31b) and with its layers parallel both to the axis (x or y) of the corresponding arm (6) and to the axis of symmetry (z).

20. Resilient support according to claim 2, characterized in that each fixing device (30c) is formed by at least one elastomer layer (2) disposed on one side of the corresponding arm (6) at one end thereof.

21. Resilient support according to claim 20, characterized in that the end of each arm (6) is provided with two elastomer layers (2) parallel to the axis (x or y) of the corresponding arm (6) and perpendicular to the axis of symmetry (z), which layers (2) are fixed to a frame (15).

22. Resilient support according to claim 21, characterized in that the end of each arm (6) is provided with three elastomer layers (2) two layers of which are disposed parallel to the axis (x or y) and perpendicular to the axis of symmetry (z) on each side of the end of said corresponding arm (6), with their axes aligned whereas the third layer is disposed parallel both to the axis (x or y) of the corresponding arm (6) and to the axis of symmetry (z), with its axis perpendicular to the common axis of the first two layers.

**Ansprüche**

1. Elastische Stütze für eine Ladung :
– mit einer elastomeren Struktur (10, 110, 210), die aus einer Vielzahl aus Armen (6 ; 130 ; 230) aus elastomerem Material besteht, wobei diese Struktur (10 ; 110 ; 210) symmetrisch bezüglich einer vorgegebenen Achse (z) ist und durch eine Formänderung der besagten Arme (6 ; 130 ; 230) eine Ausfederung der Ladung entlang den drei Richtungen eines Koordinatensystems im Raum (x, y, z) gestattet,
– mit einer Vielzahl von Befestigungsvorrichtungen (20 ; 30a ; 30b ; 30c ; 40, 140, 240) der Struktur (10, 110, 210), wobei die Stütze dadurch gekennzeichnet ist, daß sie eine Vielzahl von Seilen (5) aus Verbundwerkstoff aufweist, die in den Armen (6 ; 130 ; 230) der elastomeren Struktur (10, 110, 210) parallel zu ihren longitudinalen Achsen eingebettet sind, und daß die Befestigungsvorrichtungen eine Ausgestaltung aufweisen, die eine Beanspruchung auf Verbiegung der vorerwähnten Seile (5) in zwei Richtungen gestattet, die rechtwinklig zu der durch die Seile (5) definierten Richtung verlaufen und mit dieser das Achsensystem im Raum (x, y, z) bildet, das die Symmetrieachse (z) der vorgenannten Struktur umfaßt.

2. Elastische Stütze nach Anspruch 1, dadurch gekennzeichnet, daß die elastomere Struktur durch eine symmetrische Matrize in Gestalt eines Kreuzes (10, 210) gebildet ist, deren Arme (6) untereinander gleich sind und rechtwinklig aufeinander und zur Symmetrieachse (z) der Matrize stehen, wobei ihre longitudinalen Achsen entlang den zwei Richtungen (x, y) des vorerwähnten Koordinatensystems ausgerichtet sind und die besagten Seile (5) in den Armen (6) des Kreuzes (10) parallel zur Achse (x, y) dieser letzteren eingebettet sind, wobei eine Befestigungsvorrichtung (20 ; 30a ; 30b ; 40 ; 240) am seitlichen Ende eines jeden Armes (6 ; 230) vorgesehen ist und eine Auflage für die Verbiegung in zwei Richtungen bietet, die rechtwinklig zu der Achse des entsprechenden Armes verlaufen.

3. Elastische Stütze nach Anspruch 2, dadurch gekennzeichnet, daß jede Endbefestigungsvorrichtung mindestens aus einer Blattfeder (240) besteht, die auf der Verlängerung jeden Armes (230) der Matrize (210) angeordnet ist.

4. Elastische Stütze nach Anspruch 1, dadurch gekennzeichnet, daß die elastomere Struktur (210) unterteilt ist und mindestens vier getrennte Arme (230) umfaßt, in denen die besagten Seile (5) parallel zur longitudinalen Achse dieser Arme eingebettet sind und deren eines Ende dazu vorgesehen ist mit einer zu tragenden Nutzlast verbunden zu sein, wohingegen das andere Ende mit einer Befestigungsvorrichtung verbunden ist, die aus mindestens einer Blattfeder (240) besteht und auf der Verlängerung des entsprechenden Armes (230) der unterteilten Struktur angeordnet ist, wobei die vier Arme jeweils paarweise in zwei andere Richtungen des vorerwähnten Achsensystems orientiert sind.

5. Elastische Stütze nach einem der Ansprüche 3 oder 4, dadurch gekennzeichnet, daß jede Blattfeder (240) eine im wesentlichen durch einen Kreisbogen festgelegte Kontur aufweist.

6. Elastische Stütze nach einem der Ansprüche 3 oder 4, dadurch gekennzeichnet, daß jede Blattfeder eine im wesentlichen durch einen Ellipsenbogen festgelegte Kontur aufweist.

7. Elastische Stütze nach einem der Ansprüche 3 oder 4, dadurch gekennzeichnet, daß jedes Blatt (240) eine Mittelschicht (250) aus elastomeren Werkstoff aufweist, die zwischen zwei äußeren Schichten (260) aus Verbundwerkstoff liegt.

8. Elastische Stütze nach einem der Ansprüche 3 oder 4, dadurch gekennzeichnet, daß jedes Blatt eine Mittelschicht aus Verbundwerkstoff aufweist, die zwischen zwei äußeren Schichten aus elastomeren Werkstoff liegt.

9. Elastische Stütze nach einem der Ansprüche 7 oder 8, dadurch gekennzeichnet, daß die Matrize (210) aus einem Elastomer (300) hergestellt ist, das einen sehr niedrigen Dämpfungskoeffizienten aufweist, wohingegen jedes Blatt (240) ein Elastomer (250) enthält, das einen relativ großen Dämpfungskoeffizienten aufweist.

10. Elastische Stütze nach Anspruch 1, dadurch gekennzeichnet, daß die elastomere Struktur (110) durch eine symmetrische Matrize in Gestalt eines mit Diagonalen (130) ausgestatteten quadratischen Ringes gebildet ist und die Seile (5) aus Verbundwerkstoff in jeder der Seiten (120) und in jeder der Diagonalen (130) der Matrize parallel : zu ihren jeweiligen Achsen eingebettet sind und daß die Befestigungsvorrichtungen (140) im Medianbereich der Seiten (120) der Matrize (110) angeordnet sind, wobei die Befestigungsvorrichtungen eine Beanspruchung auf Verbiegung der Seile entlang von zwei Richtungen gestatten, die rechtwinklig zu der durch die Seile definierten Richtung verlaufen.

11. Elastische Stütze nach einem der Ansprüche 2, 4 oder 10, dadurch gekennzeichnet, daß zwei aufeinanderfolgende Seile (5), die sich entlang einer ersten Richtung folgen, – die in einer transversalen, rechtwinklig auf den Seilen (5) stehenden Ebene enthalten ist und die rechtwinklig zu einer longitudinalen, rechtwinklig zu der besagten transversalen Ebene verlaufenden Ebene ist –, einen räumlichen Abstand voneinander aufweisen, der unterschiedlich zu dem zwischen zwei aufeinanderfolgenden Seilen (5) bestehenden Abstand ist, die sich entlang einer zweiten Richtung folgen, – die in derselben vorerwähnten transversalen Ebene enthalten ist und die rechtwinklig zu der besagten ersten Richtung verläuft –, wobei diese Verteilung der Seile (5) es gestattet, die Biegesteifheit auf vorbestimmte Werte für irgendeine der drei Richtungen (x, y, z) des besagten Achsensystems einzustellen

12. Elastische Stütze nach Anspruch 10, dadurch gekennzeichnet, daß die Kreuzungsbereiche jeder Diagonalen (130) der Matrize (110) mit den Seiten (120) der letzteren im inneren und oberen Teil mit Verbindungsplatten (145, 155, 165) für die zusammenlaufenden Enden der in den vorerwähnten Diagonalen und Seiten eingebetteten Seile (5) versehen sind, wobei die besagten Platten an der elastomeren Matrize (110) angeklebt sind.

13. Elastische Stütze nach Anspruch 2, dadurch gekennzeichnet, daß die besagte Befestigungsvorrichtung (40) auch ein Mittel (19) umfaßt, das das Regeln der Eigenschwingungsfrequenz der elastischen Stütze (10) gestattet.

14. Elastische Stütze nach Anspruch 13, dadurch gekennzeichnet, daß das Mittel, welches das Regeln der Eigenschwingungsfrequenz der elastischen Stütze (10) gestattet, eine laminierte Struktur (19) mit zylindrischen Schichten umfaßt, die aus einem zentralen Stift (16) und mindestens einer Aufeinanderfolge von Schichten besteht, die eine zylindrische elastomere (mit dieser Achse verklebte) Schicht (17) und eine zylindrische metallische (mit dieser elastomeren Schicht verklebte) Schicht (18) umfaßt, wobei der Stift (16) rechtwinklig zu der Achse (x oder y) des entsprechenden Armes (6) verläuft und an der einen Seite des Endes des entsprechenden Armes (6) und symmetrisch in Bezug zu einer durch die Achse (x oder y) dieses Armes (6) verlaufenden Ebene sowie zur Symmetrieachse (z) derart angeordnet ist, daß die transversalen Hauptabmessungen des entsprechenden Armes (6) beiderseits überschritten werden, dessen Ende mit der zylindrischen laminierten Schicht (19) über zwei elastomere Schichten (2) verbunden ist, die beiderseits bezüglich der besagten Symmetrieebene dieser zylindrischen laminierten Schicht (19) angeordnet sind und die mit Winkeln (21) verklebt sind, zwischen denen das Ende des entsprechenden Armes (6) gehalten (verklebt) ist.

15. Elastische Stütze nach einem der Ansprüche 2, 3 oder 11, dadurch gekennzeichnet, daß geeignete Gewichtsmassen in den vier Ecken der elastomeren Matrize (10, 110, 210) angeordnet sind, um das Regeln der Eigenschwingungsfrequenz der elastischen Stütze (10, 100, 200) zu gestatten.

16. Elastische Stütze nach Anspruch 2, dadurch gekennzeichnet, daß jede Befestigungs vorrichtung (20) ein Paar Rollen (7a, 7b), die sowohl auf der vorerwähnten Symmetrieachse (z) als auch auf der Achse (x oder y) des entsprechenden Armes (6) rechtwinklig stehen, sowie ein Paar Rollen (8a, 8b) umfaßt, die parallel zu der Symmetrieachse (z) ist und rechtwinklig auf der Achse (x oder y) des besagten entsprechenden Armes (6) stehen, wobei die Rollen (7a, 7b ; 8a, 8b) eines jeden Paares in einer Halterung (9) befestigt und in einem solchen räumlichen Abstand angeordnet sind, daß die Aufnahme mit der Auflage und dem Gleiten des Endes dieses Armes (6) ermöglicht ist.

17. Elastische Stütze nach Anspruch 2, dadurch gekennzeichnet, daß jede Befestigungsvorrichtung (30a ; 30b) mindestens eine Vorrichtung (31a ; 31b ; 31c) mit einer laminierten Struktur umfaßt, die an einer Seite des entsprechenden Armes am Ende desselben angeordnet ist, wobei diese Vorrichtung mit einer laminierten Struktur über eine Vielzahl von elastomeren Schichten (2) verfügt, die sich mit Verstärkungsschichten (3) abwechseln und verklebt sind, und wobei diese Schichten (2, 3) parallel zu der Achse (x oder y) des entsprechenden Armes (6) und rechtwinklig auf der Symmetrieachse (z) verlaufen und wobei jede Vorrichtung mit einer laminierten Struktur an einer Halterung (13a, 13b, 14) befestigt ist.

18. Elastische Stütze nach Anspruch 17, dadurch gekennzeichnet, daß das Ende jeden Armes (6) mit zwei Vorrichtungen (31a, 31b) mit einer laminierten Struktur des vorerwähnten Typs versehen ist, die beiderseits bezüglich des besagten Endes angeordnet sind.

19. Elastische Stütze nach Anspruch 17, dadurch gekennzeichnet, daß jedes Ende der Arme (6) drei Vorrichtungen (31a, 31b, 31c) mit einer laminierten Struktur des obenerwähnten Typs umfaßt, wobei zwei Vorrichtungen (31a, 31b) beiderseits bezüglich des Endes des entsprechenden Armes (6) angeordnet sind und ihre Achsen fluchten und ihre Schichten parallel zu der Achse (x oder y) des entsprechenden Armes (6) sowie rechtwinklig zu der Symmetrieachse (z) verlaufen, wohingegen die dritte Vorrichtung (31c) mit ihrer Achse rechtwinklig zu der gemeinsamen Achse der beiden ersten Vorrichtungen (31a, 31b) angeordnet ist und ihre Schichten sowohl zu der Achse (x oder y) des entsprechenden Armes (6) als auch zu der Symmetrieachse (z) parallel verlaufen.

20. Elastische Stütze nach Anspruch 2, dadurch gekennzeichnet, daß jedes Befestigungsmittel (30c) aus mindestens einer elastomeren Schicht (2) besteht, die an einer Seite des entsprechenden Armes (6) an einem Ende von diesem angeordnet ist.

21. Elastische Stütze nach Anspruch 20, dadurch gekennzeichnet, daß am Ende eines jeden Armes (6) zwei elastomere Schichten (2) vorgesehen sind, die parallel zu der Achse (x oder y) des entsprechenden Armes (6) verlaufen und rechtwinklig auf der Symmetrieachse (z) stehen, wobei die Schichten (2) an einer Halterung (15) befestigt sind.

22. Elastische Stütze nach Anspruch 21, dadurch gekennzeichnet, daß am Ende eines jeden Armes (6) drei elastomere Schichten (2) vorgesehen sind, von denen zwei Schichten parallel zu der Achse (x oder y) und rechtwinklig zu der Symmetrieachse (z) beiderseits bezüglich des Endes des besagten entsprechenden Armes (6) mit miteinander fluchten den Achsen angeordnet sind, wohingegen die dritte Schicht sowohl zu der Achse (x oder y) des entsprechenden Armes (6) als auch zu der Symmetrieachse (z) parallel angeordnet ist, wobei seine Achse rechtwinklig zu der gemeinsamen Achse der beiden ersten Schichten verläuft.

# FIG.1

# FIG. 2

# FIG.3

FIG.4

FIG.5

EP 0 296 974 B1

## FIG.6

## FIG.7

## FIG.8

## FIG.10

## FIG.9

FIG.11

FIG.12

FIG.13

18

# FIG.14a

120
130
120          145

# FIG.14b

120
130
120          155

# FIG.14c

120
130
120          165

FIG. 16

FIG. 15